# EUROPÄISCHE PATENTANMELDUNG

(11) **EP 2 298 518 A2**
(43) Veröffentlichungstag der Anmeldung: **23.03.2011**
(21) Anmeldenummer: 10009469.7
(22) Anmeldetag: 11.09.2010
(51) Int. Cl.: B27N 7/00

(54) **Verfahren zur Oberflächenglättung und Vorrichtung zur Flächenkaschierung**

(30) Priorität: 17.09.2009 DE 102009041928
(71) Anmelder: IMA Klessmann GmbH Holzbearbeitungssysteme, 32312 Lübbecke (DE)
(72) Erfinder: Hampel, Thomas, 32312 Lübbecke (DE); Hucke, Helmut, 32312 Lübbecke (DE)
(74) Vertreter: Schober, Mirko

(57) **Zusammenfassung**

Ein derartiges Verfahren wird zur Glättung von Oberflächen von Platten aus Holz oder Holzaustauschstoffen, insbesondere Spanplatten, mit einer Oberseite und einer Unterseite, mit folgenden Schritten eingesetzt:
i) Anbringen eines Kantenbandes (4) an einer zu glättenden Schmalseite einer Platte (1) mittels eines zur Entfaltung der Haftwirkung aktivierbaren Haftmittels,
ii) Aushärten oder Verfestigen oder Erkalten des Haftmittels.

Um mit einem solchen Verfahren mit relativ wenig Aufwand eine Vergütung der Schmalseiten von Platten zu ermöglichen, erfolgt vor dem vollständigen Aushärten oder Verfestigen oder Erkalten des Haftmittels eine Flächenkaschierung unter Verpressung der Platte mittels einer Druckbeaufschlagung auf die Ober- und/oder Unterseite.

## Beschreibung

Die Erfindung betrifft ein Verfahren zur Glättung von Oberflächen an den Schmalseiten von Platten aus Holz oder Holzaustauschmaterial. Die Erfindung betrifft auch eine entsprechende Vorrichtung zur Flächenkaschierung.

Spanplatten sind aufgrund ihrer Herstellung an den Breitseiten durch eine Feinspanschüttung hochverdichtet und damit glatt ausgebildet. Zwischen den Breitseiten sind Spanplatten jedoch in der Mittellage sehr porös. Bei der Fertigung von Möbelteilen, die aus großformatigen Platten zugeschnitten werden, wirkt sich diese poröse Mittellage sehr negativ auf das optische Design der Platte aus, so dass die Oberfläche im Zweifel geglättet werden muss. Diese Glättung spielt insbesondere bei der Flächenkaschierung der Platten einer Rolle, bei der ein dünnes Kaschierungsmaterial durch Druckwalzen auf die Ober- und Unterseite der Spanplatte aufgebracht und dabei um die Schmalseiten oder Kanten der Spanplatte gelegt wird.

Für das Oberflächenglätten sind aus EP 0744 260 B1, DE 199 07 939 C1 und DE 197 32 423 C1 bereits Verfahren bekannt, bei welchem eine Vergütungsmasse in den Randbereich eingebracht wird, um die poröse Mittellage der Spanplatte zu glätten und dann später eine dekorative Kante dort aufzubringen. Diese Verfahren sind sehr aufwendig und kostenintensiv.

Der Erfindung liegt daher die Aufgabe zugrunde, ein Verfahren der eingangs genannten Art anzugeben, durch welches mit relativ wenig Aufwand eine Vergütung der Schmalseiten von Platten möglich wird.

Gelöst wird diese Aufgabe durch ein Verfahren mit den Merkmalen des Anspruchs 1 sowie eine Vorrichtung mit den Merkmalen des Anspruchs 5, vorteilhafte Ausgestaltungen finden sich in den Unteransprüchen.

Hierbei wird die Kante der Platte, insbesondere einer Spanplatte, mit einem Kantenband versehen, welches mittels eines Haftmittels, insbesondere einem Heißkleber, an der Kante angebracht wird. Das Haftmittel wird zur Entfaltung seiner Haftwirkung aktiviert, und das Kantenband wird an der Kante angedrückt. Erfindungsgemäß ist nun vorgesehen, dass das Haftmittel solange flexibel gehalten wird, wie die Platte durch den Druck, der bei der Flächenkaschierung auf die Platte ausgeübt wird, so verpresst wird, wobei die Platte dann in ihrer Dicke zusammengestaucht wird. Erfindungsgemäß geschieht dieses Verpressen zu einem Zeitpunkt, zu dem das Haftmittel noch nicht vollständig ausgehärtet ist, aber schon an der Kante der Spanplatte haftet. Das Aushärten oder Verfestigen oder Erkalten des Haftmittels kann z. B. durch gesonderte Energiezufuhr, etwa durch Wärmestrahlung, verhindert werden. Im verpressten Zustand härtet im Folgenden das Haftmittel aus. Die Verpressung wird nach dem Aushärten oder Verfestigen oder Erkalten aufgehoben. Hierdurch entspannt sich das Plattenmaterial und dessen Dicke nimmt dabei geringfügig zu. Durch das flexible Halten des Haftmittels wird verhindert, dass das Kantenband beim Verpressen gestaucht wird und Knicke oder Falten wirft.

Die Erfindung wird nachfolgend anhand der Zeichnungen in den Figuren 1 bis 8 schematisch näher erläutert.
Figur 1 zeigt ein für die Flächenkaschierung vorbereitetes Werkstück in Schnittdarstellung.
Figur 2 zeigt eine Werkstückkante nach dem Aufbringen eines Kantenbandes.
Figur 3 zeigt eine andere Werkstückkante nach dem Aufbringen eines Kantenbandes.
Figur 4 zeigt einen Nachbearbeitungsschritt nach dem Aufbringen des Kantenbandes.
Figur 5 zeigt einen Bearbeitungsschritt, bei dem das Haftmittel durch Erwärmen am Aushärten gehindert wird.
Figur 6 zeigt einen nicht gewünschten Zustand des Kantenbandes während des Verpressvorgangs.
Figur 7 zeigt ein Beispiel für eine Maschine zur Durchführung des erfindungsgemäßen Verfahrens.
Figur 8 zeigt eine Schnittansicht durch einen Teil der in Figur 7 gezeigten Maschine.

Das erfindungsgemäße Verfahren dient unter anderem zur Kaschierung einer Spanplatte 1 mit einem Flächenkaschierungsmaterial 5, welches um die Platte 1, insbesondere eine Spanplatte, herum gelegt wird. Hierbei kommt es bei herkömmlicher Vorgehensweise im Bereich der Seiten oder Kanten der Platte 1 aufgrund der dortigen porösen Struktur der Mittellage 3 der Platte 1 bei der Kaschierung zu einer nicht glatten Oberfläche, währen die Kaschierung 5 an der Ober- 2a und Unterseite 2b glatt anliegt, da diese bei Spanplatten hochverdichtet sind. Erfindungsgemäß werden an den Kanten mit einem Kantenband 4 bekantet, bevor mit dem Flächenkaschierungsmaterial 5 die nachfolgende Ummantelung 6 erfolgen kann.

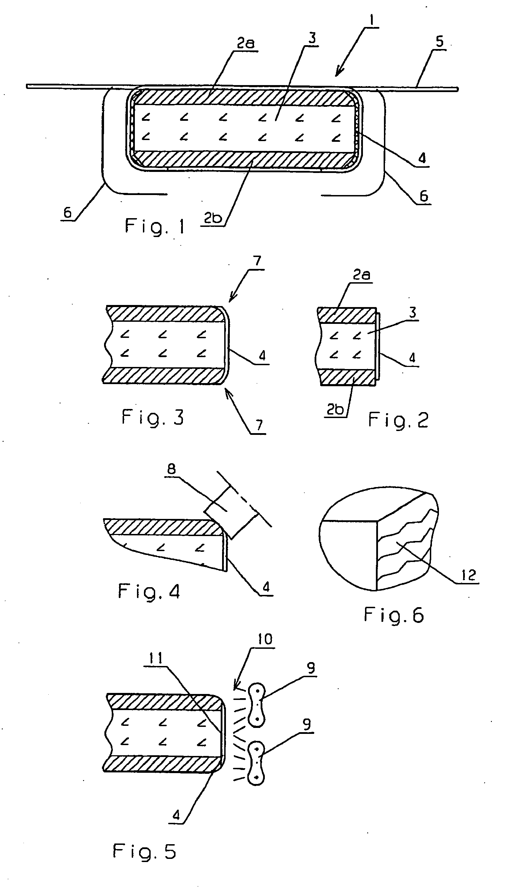

Das Kantenband wird in bekannter Weise auf die Kante der Spanplatte 1 aufgebracht, wie in den Figuren 2 und 3 zusehen ist. Figur 2 zeigt eine Situation, in der ein bevorzugt harzgetränktes Kantenband 4 über den Mittelteil 3 der Spanplatte 1 gelegt ist und in dem hochverdichteten Bereich der Oberseite 2a bzw. der Unterseite 2b endet. In Figur 3 ist das Kantenband auf eine Profilform 7 aufgesetzt, welche zuvor angefräst wurde. Die Profilform 7 wird hier durch das Kantenband 4 mit abgedeckt. Nach dem Aufbringen des Kantenbandes 4 wird dieses - wie in Figur 4 gezeigt - in der Regel mit einem Fräswerkzeug 8 durch Anfräsen nachbearbeitet. Für die Erfindung ist wichtig, dass an dieser Stelle das Haftmittel 11 (in der Regel ein Heißkleber) zwischen Kantenband und 4 und Kante der Spanplatte noch nicht vollständig ausgehärtet, verfestigt oder erkaltet ist. Ausgehärtet, verfestigt oder erkaltet bedeutet in diesem Zusammenhang, dass je nach Art der Verbindung durch das Haftmittel eine endgültige Verbindung zwischen Kantenband und Kante hergestellt ist. Je nach eingesetztem Haftmittel kann also auch ein Aushärten oder Verfestigen oder Erkalten des Haftmittels erfolgen. Die Verhinderung des Aushärtens, Verfestigens oder Erkaltens kann zum einen durch die Wahl eines langsam seine Klebewirkung entfaltenden Klebstoffs erreicht werden, zum anderen kann das Aushärten durch geeignete Maßnahmen verhindert oder das Haftmittel reaktiviert werden. Bevorzugt wird, wie Figur 5 gezeigt, nach der Bekantung mit dem Kantenband 4 und dem Profilfräsen durch eine Energiequelle 9, zum Beispiel einem Strahler, Wärme 10 auf das Kantenband 4 gebracht. Diese Wärme hält den durch das Haftmittel erzeugten Klebefilm 11 am Kantenband 4 und oder der Kante flexibel. Diese Flexibilität wird im nachfolgenden Prozessschritt bei der Flächenkaschierung genutzt.

Dabei wird mittels Pressrollen oder anderer Mittel hoher Druck auf die Ober- und/oder Unterseite der mit dem Kantenband 4 versehenen Spanplatte 1 ausgeübt, so dass die Spanplatte 1 zusammengedrückt wird, was bei vollständig ausgehärtetem, verfestigtem oder erkalteten Haftmittel 11 das Kantenband 4 ebenfalls stauchen würde und es zu "Knitterfalten" 12 käme, vgl. Figur 6, was zu einer unruhigen Oberfläche im Bereich der Kante führen würde. Durch die Flexibilität des Schmelzklebers 11 kann das Kantenband 4 beim Verpressen der Platte 1 nicht gestaucht werden und bleibt so glatt und faltenfrei.

Mit dem Verpressen wird gleichzeig auch die Flächenkaschierung 5 (vgl. Figur 1) auf der Ober- und/oder Unterseite der Platte 1 aufgebracht. Nach dem Aushärten, Verfestigen oder Erkalten des Haftmittels 11 wird auch der mit dem Kantenband 4 bekantete Bereich der Schmalseite mit der Flächenkaschierung 5, 6 versehen.

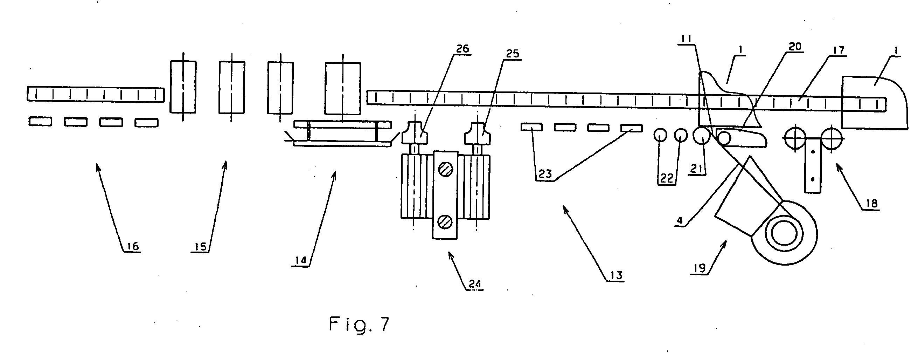

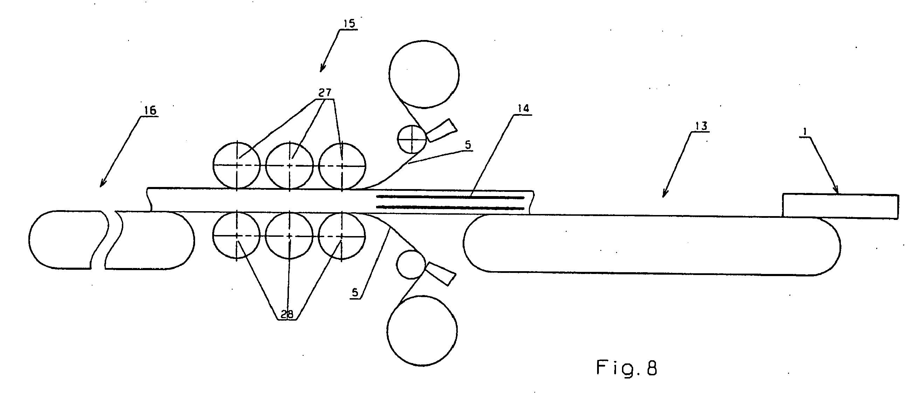

Eine entsprechende Vorrichtung zur Flächenkaschierung ist in den Figuren 7 und 8 gezeigt. Die Vorrichtung weist einen Bekantungs- und Fräsbereich 13 mit einem Energiezuführungsbereich 14, einem Flächenkaschierungsbereich 15 und einem Ummantelungsbereich 16 auf. Das plattenförmige Werkstück 1 wird auf einer Transportkette 17 durch die Maschine transportiert und durch ein Fräsaggregat 18 bearbeitet.

Mit einer Bekantungsvorrichtung 19 wird das Kantenband 4 durch eine Kleberangabe 20 mit Kleber 11 beschichtet - wie in den Figuren 2 und 3 gezeigt - und über nachfolgende Druckrollen 21/22 für die ebene Kante (Figur 2) bzw. den Profildruckrollen 23 für eine profilierte Kante (Figur 3) mit dem Werkstück 1 verpresst.

Mit der nachfolgenden Frässtation 24 und den Fräswerkzeugen 25/26 wird die entsprechende Profilform gefräst (vgl. Figur 4). Unmittelbar vor dem Flächenkaschierbereich 15 befindet sich der Energiezuführungsbereich 14, bei dem es sich bevorzugt um eine Wärmequelle handelt. Diesem folgt ein Ummantelungsbereich 16, mit dem das Kantenband 4 nach dem Aushärten, Verfestigen oder Erkalten des Haftmittels oder Klebers flächenkaschiert wird.

Wie insbesondere in der Detailzeichnung der Figur 8 zu sehen ist, ist der Energiezuführungsbereich 14 mit den Strahlern 9 (vgl. Figur 5) unmittelbar vor der Flächenkaschierung mit den Druckrollen 27/28 angeordnet ist. So kann sicher gestellt werden, dass die Energiezuführung auf das Kantenband 4 unmittelbar vor den Pressrollen 27/28 für die Flächenkaschierung erfolgen kann, so dass beim Kaschieren der Ober und/oder Unterseite der Platte 1 das Haftmittel flexibel bleibt und eine Stauchung des Kantenbandes 4 verhindert wird.

## Patentansprüche

1. Verfahren zur Glättung von Oberflächen von Platten (1) aus Holz oder Holzaustauschstoffen, insbesondere Spanplatten, mit einer Oberseite (2a) und einer Unterseite (2b), mit folgenden Schritten:
i) Anbringen eines Kantenbandes (4) an einer zu glättenden Schmalseite einer Platte (1) mittels eines zur Entfaltung der Haftwirkung aktivierbaren Haftmittels,
ii) Aushärten oder Verfestigen oder Erkalten des Haftmittels,
wobei vor dem vollständigen Aushärten oder Verfestigen oder Erkalten des Haftmittels eine Flächenkaschierung unter Verpressung der Platte (1) mittels einer Druckbeaufschlagung auf die Ober- und/oder Unterseite (2a, 2b) erfolgt.

2. Verfahren nach Anspruch 1,
**dadurch gekennzeichnet,**
**dass** das Haftmittel durch Energiezufuhr vor und/oder bei der Verpressung am vollständigen Aushärten oder Verfestigen oder Erkalten gehindert wird.

3. Verfahren nach Anspruch 1 oder 3,
**dadurch gekennzeichnet,**
**dass** die Flächen der Ober- und/oder Unterseite (2a, 2b) der Spanplatte bei der Verpressung der Spanplatte mit einer Flächenkaschierung versehen werden.

4. Verfahren nach einem der vorherigen Ansprüche,
**dadurch gekennzeichnet,**
**dass** nach dem Aushärten oder Verfestigen oder Erkalten des Haftmittels die mit dem Kantenband (4) bekantete Schmalseite der Platte mit einem Flächenkaschierungsmaterial versehen wird.

5. Vorrichtung zur Flächenkaschierung von Oberflächen von Platten (1) aus Holz oder Holzaustauschstoffen, insbesondere Spanplatten, mit einer Oberseite (2a) und einer Unterseite (2b), insbesondere zur Durchführung des Verfahrens nach einem der vorherigen Ansprüche, mit einer Bekantungsvorrichtung (19) zur Bekantung der Schmalseite der Platte und einem Flächenkaschierbereich (15) zum Aufbringen eines Flächenkaschierungsmaterials (5) auf die Ober- und/oder Unterseite (2a, 2b) der Platte mittels Druckbeaufschlagung, wobei zwischen der Bekantungsvorrichtung (19) und dem Flächenkaschierbereich (15) ein Energiezuführungsbereich angeordnet ist, der dazu ausgelegt ist, das vollständige Aushärten oder Verfestigen oder Erkalten eines das Kantenband (4) mit der Schmalseite der Platte (1) verbindenden Haftmittels (11) zu verhindern.
